(19) Europäisches Patentamt / European Patent Office / Office européen des brevets

(11) **EP 3 270 232 B1**

(12) **FASCICULE DE BREVET EUROPEEN**

(45) Date de publication et mention de la délivrance du brevet:
**02.07.2025 Bulletin 2025/27**

(21) Numéro de dépôt: **17180937.9**

(22) Date de dépôt: **12.07.2017**

(51) Classification Internationale des Brevets (IPC):
**G03H 1/04** *(2006.01)* **G01N 15/14** *(2024.01)*

(52) Classification Coopérative des Brevets (CPC):
**G03H 1/0465; G03H 1/0443;** G01N 21/453;
G01N 2015/1454; G03H 2001/0447; G03H 2222/12;
G03H 2222/24; G03H 2223/12

(54) **DISPOSITIF D'OBSERVATION D'UN ÉCHANTILLON**

BEOBACHTUNGSVORRICHTUNG FÜR EINE PROBE

DEVICE FOR OBSERVING A SAMPLE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **13.07.2016 FR 1656751**

(43) Date de publication de la demande:
**17.01.2018 Bulletin 2018/03**

(73) Titulaire: **Commissariat à l'Energie Atomique et aux Energies Alternatives**
**75015 Paris (FR)**

(72) Inventeurs:
• **ALLIER, Cédric**
**38000 GRENOBLE (FR)**
• **BORDY, Thomas**
**38000 GRENOBLE (FR)**
• **TEMPLIER, François**
**38054 GRENOBLE Cedex 09 (FR)**

(74) Mandataire: **INNOV-GROUP**
**209 Avenue Berthelot**
**69007 Lyon (FR)**

(56) Documents cités:
EP-A1- 2 772 748    EP-A1- 3 433 678
EP-A1- 3 433 679    EP-B1- 2 122 326
EP-B1- 3 433 679    WO-A1-2017/162985
WO-A1-2017/178723   WO-A2-2007/104057

• SERHAN ISIKMAN ET AL: "Lensfree cell holography on a chip: From holographic cell signatures to microscopic reconstruction", LEOS 2009 -22ND ANNUALL MEETING OF THE IEEE LASERS AND ELECTRO-OPTICS SOCIETY. LEO 2009 - 4-8 OCT. 2009 - BELEK-ANTALYA, TURKEY, IEEE, PISCATAWAY, NJ, USA, 4 October 2009 (2009-10-04), pages 404 - 405, XP031572578, ISBN: 978-1-4244-3680-4
• WAHEB BISHARA ET AL: "Holographic pixel super-resolution in portable lensless on-chip microscopy using a fiber-optic array", LAB ON A CHIP, vol. 11, no. 7, 1 March 2011 (2011-03-01), pages 1276, XP055121769, ISSN: 1473-0197, DOI: 10.1039/c0lc00684j

EP 3 270 232 B1

**Description**

**DOMAINE TECHNIQUE**

Le domaine technique de l'invention est l'observation d'échantillon par la formation d'un hologramme de l'échantillon à l'aide d'un capteur d'image.

**ART ANTERIEUR**

L'observation d'échantillons, et en particulier des échantillons biologiques, par imagerie sans lentille connaît un développement important depuis ces dix dernières années. Cette technique permet d'observer un échantillon en le disposant entre une source de lumière et un capteur d'image, sans disposer de lentille de grandissement optique entre l'échantillon et le capteur d'image. Ainsi, le capteur d'image collecte une image d'une onde lumineuse transmise par l'échantillon.

Cette image est formée de figures d'interférences entre l'onde lumineuse émise par la source et transmise par l'échantillon, et des ondes de diffraction, résultant de la diffraction par l'échantillon de l'onde lumineuse émise par la source. Ces figures d'interférences sont parfois dénommées figures de diffraction, ou désignées par le terme anglais « diffraction pattern ». L'image formée sur le capteur d'image peut être traitée par un algorithme de propagation numérique, de manière à estimer des propriétés optiques de l'échantillon. De tels algorithmes sont bien connus dans le domaine de la reconstruction holographique. Pour cela, la distance entre l'échantillon et le capteur d'image étant connue, on applique un algorithme de reconstruction holographique, prenant en compte cette distance.

La publication Garcia-Sucerquia J., « Digital in-line holographic microscopy », Applied Optics, Vol. 45, No. 5, 10 february 2006, décrit l'observation de particules, par exemple des particules biologiques, à l'aide d'un faisceau laser, ainsi que l'application d'algorithmes de reconstruction à des images formées sur un capteur CCD.

Le document WO2008090330 a montré qu'en remplaçant la source de lumière laser par une diode électroluminescente, filtrée spatialement, il était possible d'obtenir une image exploitable d'échantillons biologiques, en l'occurrence des cellules, par imagerie sans lentille. Le dispositif décrit dans ce document permet d'associer, à chaque cellule, une figure d'interférences dont la morphologie permet d'identifier le type de cellule. Dans ce document, la source de lumière est une diode électroluminescente associée à un diaphragme, formant une ouverture, l'ouverture étant désignée par les termes "aperture" ou "pin hole".

D'autres publications ont suivi, confirmant l'intérêt d'une telle technologie, par exemple US2012/0218379 et EP2772748. Dans ces publications, on décrit des dispositifs comprenant un diaphragme formant un filtre spatial entre la source de lumière et l'échantillon. Le filtre spatial définit une ouverture dont la diagonale ou le diamètre est compris entre quelques dizaines de $\mu$m et environ 200 $\mu$m. Le document EP2772748 décrit par exemple une configuration selon laquelle lorsque la source de lumière est une diode électroluminescente, la distance entre la source de lumière et l'échantillon est par exemple égale à 5 cm. Lorsque les dimensions de la source de lumière sont inférieures au dixième de cette distance, il est précisé que l'utilisation d'un diaphragme n'est pas nécessaire.

Les inventeurs ont constaté que la présence d'un tel filtre spatial comportait certains inconvénients. D'une part, il impose un centrage précis de la source de lumière par rapport à l'ouverture qu'il définit. De plus, ce centrage doit demeurer précis lors de la mise en œuvre du dispositif, en particulier lors de sa manipulation ou de son transport. Par ailleurs, la présence d'un filtre spatial suppose d'établir un compromis au niveau de l'ouverture du filtre. Une faible ouverture permet d'obtenir une bonne cohérence spatiale, mais limite considérablement l'angle solide d'émission de l'onde lumineuse incidente, ce qui réduit la quantité de lumière atteignant le détecteur. Cela est préjudiciable à la sensibilité de la mesure. Les inventeurs proposent un dispositif permettant de remédier à ces inconvénients.

**EXPOSE DE L'INVENTION**

Un objet de l'invention est un dispositif d'observation d'un échantillon selon la revendication 1. La source de lumière peut comporter une pluralité de diodes électroluminescentes micrométriques. Les diodes électroluminescentes micrométriques peuvent alors être agencées selon une matrice, en étant espacées les unes des autres d'une distance inférieure à 50 $\mu$m. Les diodes électroluminescentes micrométriques peuvent avoir des bandes spectrales d'émission différentes l'une de l'autre et/ou peuvent être aptes à être activées successivement ou simultanément. Les diodes électroluminescentes micrométriques peuvent être aptes à être activées indépendamment les unes des autres.

Un autre objet de l'invention est un procédé d'observation d'un échantillon selon la revendication 7.

La diode électroluminescente micrométrique peut notamment présenter une puissance optique d'émission supérieure à 50 $\mu$W.

La source de lumière peut comporter une pluralité de diodes électroluminescentes micrométriques. Les diodes électroluminescentes micrométriques peuvent alors être agencées selon une matrice, en étant espacées les unes des autres d'une distance inférieure à 50 $\mu$m. Les diodes électroluminescentes micrométriques peuvent avoir des bandes spectrales d'émission différentes l'une de l'autre et/ou peuvent être aptes à être activées successivement ou simultanément. Les diodes électroluminescentes micrométriques peuvent être aptes à être activées indépendamment les unes des autres.

Un autre objet de l'invention est un procédé d'observation d'un échantillon comportant les étapes suivantes :

a) disposition d'un échantillon entre une source de lumière et un capteur d'image, de telle sorte que le capteur d'image est apte à acquérir une image de l'échantillon lorsque l'échantillon est illuminé par la source de lumière ;

b) illumination de l'échantillon par la source de lumière et acquisition d'une image de l'échantillon par le capteur d'image ;

le procédé étant caractérisé en ce qu'il est mis en œuvre en utilisant une source de lumière comportant au moins une diode électroluminescente micrométrique dont un plus grand diamètre ou une plus grande diagonale est inférieure à 500 $\mu$m.

De préférence, aucune optique de grossissement n'est disposée entre l'échantillon et le capteur d'image. Avantageusement, le plus grand diamètre ou la plus grande diagonale de la diode électroluminescente micrométrique est inférieure à 150 $\mu$m ou à 50 $\mu$m.

Selon un mode de réalisation, la source de lumière comporte une pluralité de diodes électroluminescentes micrométriques. Les diodes électroluminescentes micrométriques peuvent alors être activées simultanément ou indépendamment les unes des autres ou successivement. Dans ce dernier cas, le capteur d'image peut acquérir une image lors de chaque activation successive. Les diodes électroluminescentes micrométriques peuvent notamment avoir des bandes spectrales d'émission différentes les unes des autres.

Selon un mode de réalisation, le capteur d'image s'étend selon un plan de détection et le procédé comporte une application d'un opérateur de propagation à l'image acquise, ou à chaque image acquise, de façon à obtenir une expression complexe d'une onde lumineuse, à laquelle est exposé le capteur d'image, dans un plan de reconstruction situé à une distance non nulle du plan de détection. Le plan de reconstruction peut être un plan selon lequel s'étend l'échantillon.

Le procédé peut notamment être mis en œuvre à l'aide du dispositif décrit dans cette description.

D'autres avantages et caractéristiques ressortiront plus clairement de la description qui va suivre de modes particuliers de réalisation de l'invention, donnés à titre d'exemples non limitatifs, et représentés sur les dessins listés ci-dessous.

## FIGURES

La figure 1A représente un dispositif d'observation d'un échantillon selon l'art antérieur.

La figure 1B illustre une des difficultés rencontrées en lien avec l'art antérieur.

La figure 1C représente un autre dispositif d'observation d'un échantillon selon l'art antérieur.

La figure 2 représente un dispositif d'observation d'un échantillon selon l'invention.

La figure 3 représente un exemple de source de lumière pouvant être utilisée dans un dispositif selon l'invention.

La figure 4A représente un autre exemple d'une source de lumière matricielle pouvant être utilisée dans un dispositif selon l'invention. La figure 4B montre l'évolution de la puissance d'émission d'une diode électroluminescente élémentaire de cette source de lumière en fonction de l'intensité d'un courant d'alimentation.

Les figures 5A et 5B représentent respectivement des images reconstruites obtenues en appliquant un algorithme de reconstruction holographique à une image acquise par un capteur d'image en utilisant un dispositif de l'art antérieur et selon l'invention.

## EXPOSE DE MODES DE REALISATION PARTICULIERS

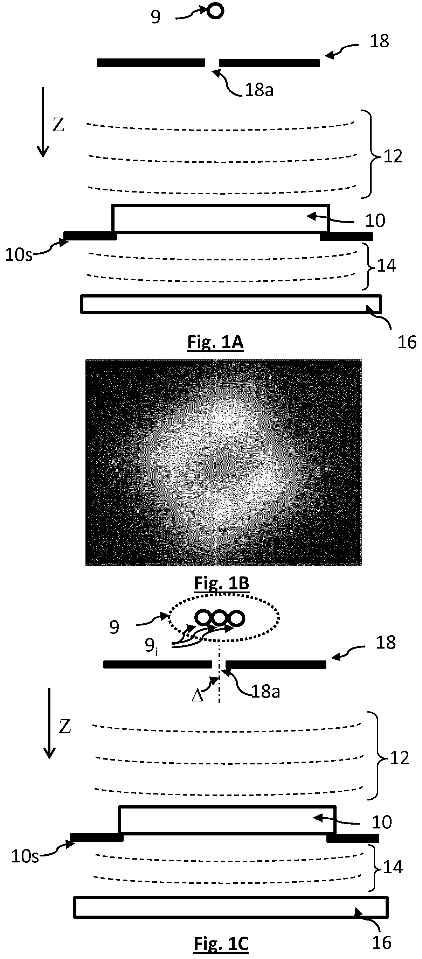

La figure 1A représente un dispositif d'observation d'un échantillon par imagerie sans lentille selon un dispositif de l'art antérieur. Une source de lumière 9, par exemple une diode électroluminescente, émet une onde lumineuse incidente 12 illuminant un échantillon 10, maintenu sur un support 10s. En traversant l'échantillon, l'onde lumineuse incidente forme une onde dite transmise 14 se propageant vers un capteur d'image 16. Le capteur d'image est apte à former une image de l'échantillon 10, désignée par le terme hologramme. On note l'absence d'optique de grandissement entre l'échantillon 10 et le capteur d'image 16. Le dispositif comporte également un filtre spatial 18, présentant une ouverture 18a par rapport à laquelle la source de lumière 9 est centrée. D'une façon générale, un filtre spatial correspond à une surface opaque dans laquelle est ménagée une ouverture transparente 18a. Dans le document US2012/0218379, le diamètre de l'ouverture 18a est de l'ordre de 50 $\mu$m à 100 $\mu$m. La fonction de ce filtre spatial est de définir une cohérence spatiale de la source de lumière.

De préférence, l'onde lumineuse incidente présente une bande spectrale étroite, par exemple inférieure à 50 nm, de façon à améliorer la cohérence temporelle. Un filtre optique de type passe-bande peut être disposé entre la source de lumière 9 et le filtre spatial 18. Cela permet de compenser la cohérence temporelle, souvent médiocre, d'une diode électroluminescente.

Cependant, les inventeurs ont constaté que la présence d'un tel filtre spatial comporte des inconvénients, en particulier lorsque la source de lumière est une diode électroluminescente. Dans un tel cas, l'intensité de l'onde incidente 12 atteignant le capteur d'image 16 peut ne pas être uniforme. En effet, la géométrie de la diode électroluminescente est projetée, à travers le filtre spatial, sur le capteur d'image 16, de la même manière que les dispositifs photographiques à sténopé. La figure 1B illustre une image obtenue en utilisant un dispositif tel que celui schématisé sur la figure 1A, la source de lumière étant une diode électroluminescente située à une distance d'environ 5 cm du capteur d'image 16, en l'absence d'échantillon entre la source de lumière et le capteur d'image. On observe que dans la partie éclairée de l'image, l'éclairement n'est pas uniforme, ce qui est préjudiciable à la qualité des résultats obtenus. De plus, la profondeur de champ d'une configuration optique de type sténopé étant infinie, cet éclairement non uniforme est obtenu quelle que soit la distance entre la source de lumière et le capteur.

Un autre inconvénient associé à l'utilisation d'un filtre spatial 18 est le centrage de la source de lumière par rapport à l'ouverture 18a définie par ce filtre. Ce problème est d'autant plus important que certains dispositifs comportent une source de lumière 9 comprenant une pluralité de sources de lumières élémentaires $9_i$ adjacentes les unes des autres, et pouvant être successivement activées, comme cela est représenté sur la figure 1C. Il est difficile d'optimiser le centrage de chaque source de lumière élémentaire par rapport à l'ouverture 18a. Aussi, certaines sources de lumière élémentaires sont centrées, c'est-à-dire disposées selon un axe central Δ de l'ouverture 18a, tandis que d'autres ne le sont pas.

Une solution existe, consistant à interposer un diffuseur optique entre la diode électroluminescente et le filtre spatial, mais cela augmente le prix du dispositif.

Par ailleurs, l'interposition d'un filtre spatial entre une diode électroluminescente et un échantillon réduit drastiquement l'éclairement de l'échantillon, ce dernier n'étant exposé qu'à une faible partie de l'onde lumineuse émise par la diode électroluminescente. Cet inconvénient est particulièrement crucial lorsque l'échantillon comporte des particules en mouvement, nécessitant une image acquise selon un temps d'exposition très court, typiquement de l'ordre de 100 ms. Par ailleurs, dans une telle configuration, il est difficile d'interposer un filtre passe-bande entre la diode électroluminescente et l'échantillon, car il génère une atténuation trop importante de l'onde incidente 12.

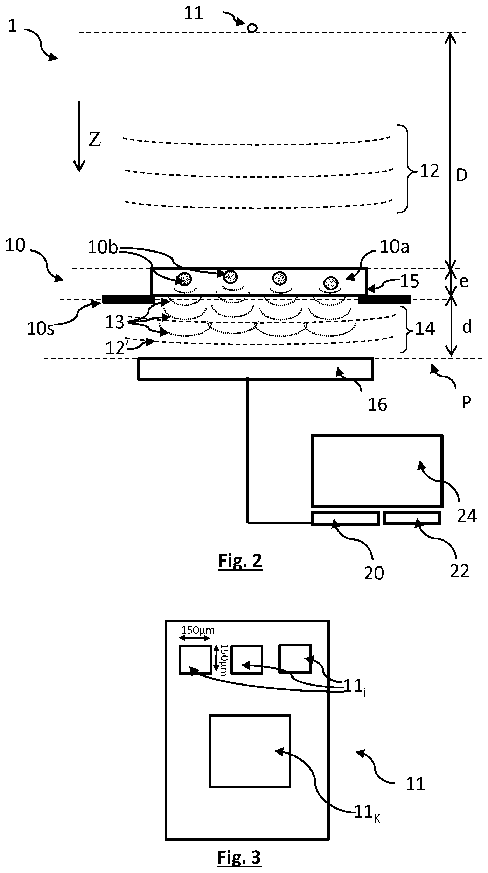

Les inventeurs, ayant constaté ces problèmes, ont conçu un dispositif 1 tel que présenté sur la figure 2. Dans ce dispositif, la source de lumière 11 comporte une diode électroluminescente dont le diamètre ou la plus grande diagonale est inférieur à 500 μm, et de préférence inférieur à 100 μm, voire à 50 μm ou 10 μm. Une telle diode électroluminescente est désignée par le terme diode micrométrique, ou microdiode. Elle émet une onde lumineuse 12, dite onde lumineuse incidente, se propageant en direction d'un échantillon 10, selon un axe de propagation Z. L'onde lumineuse est émise selon une bande spectrale Δλ, comportant une longueur d'onde λ. Cette longueur d'onde peut être une longueur d'onde centrale de ladite bande spectrale.

L'échantillon 10 est un échantillon que l'on souhaite caractériser. Il peut notamment s'agir d'un milieu 10a comportant des particules 10b. Les particules peuvent être des cellules, des microorganismes, par exemple des bactéries ou des levures, des microalgues, des microbilles, ou des gouttelettes insolubles dans le milieu liquide, par exemple des nanoparticules lipidiques. De préférence, les particules 10b ont un diamètre, ou sont inscrites dans un diamètre, inférieur à 1 mm, et de préférence inférieure à 100 μm. Il s'agit de microparticules (diamètre inférieur à 1 mm) ou de nanoparticules (diamètre inférieur à 1 μm). Le milieu 10a, dans lequel baignent les particules, peut être un milieu liquide, par exemple une phase liquide d'un liquide corporel, d'un milieu de culture ou d'un liquide prélevé dans l'environnement ou dans un procédé industriel. Il peut également s'agir d'un milieu solide ou ayant la consistance d'un gel, par exemple un substrat de type gélose, propice à la croissance de colonies bactériennes. L'échantillon peut également être une lame de tissu destinée à une analyse histologique, ou lame d'anatomopathologie, comportant une fine épaisseur de tissu déposée sur une lame transparente. Par fine épaisseur, on entend une épaisseur de préférence inférieure à 100 μm, et de préférence inférieure à 10 μm, typiquement quelques micromètres.

L'échantillon 10 est maintenu sur un support 10s. Il peut être est contenu dans une chambre fluidique 15 ou déposé sur une lame transparente. L'épaisseur e de l'échantillon 10, selon l'axe de propagation Z varie typiquement entre 20 μm et 1 cm, et est de préférence comprise entre 50 μm et 500 μm, par exemple 150 μm.

La distance D entre la source de lumière 11 et l'échantillon 10 est de préférence supérieure à 1 cm. Elle est de préférence comprise entre 2 et 30 cm, et de préférence comprise entre 2 et 5 cm ou 10 cm. De préférence, la source de lumière, vue par l'échantillon, est considérée comme ponctuelle. De préférence, la bande spectrale d'émission Δλ de l'onde lumineuse incidente 12 a une largeur inférieure à 100 nm. Par largeur de bande spectrale, on entend une largeur à mi-hauteur de ladite bande spectrale. Une telle bande spectrale peut être obtenue par le biais d'un filtre passe-bande intercalé entre la source de lumière 11 et l'échantillon 10.

L'échantillon 10 est disposé entre la source de lumière 11 et un capteur d'image 16. Ce dernier s'étend de préférence parallèlement, ou sensiblement parallèlement au plan selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image selon un plan de détection P. Dans l'exemple représenté, il s'agit d'un capteur d'image comportant une matrice de pixels, de type CCD ou un CMOS. Les CMOS sont les capteurs préférés, car la taille des pixels est plus faible, ce qui permet d'acquérir des images dont la résolution spatiale est plus favorable. Le plan de détection P s'étend de préférence perpendiculairement à l'axe de propagation Z de l'onde lumineuse incidente 12.

La distance d entre l'échantillon 10 et la matrice de pixels du capteur d'image 16 est préférentiellement comprise entre 50 μm et 2 cm, de préférence comprise entre 100 μm et 2 mm.

On remarque l'absence d'optique de grandissement ou de formation d'image entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image.

Sous l'effet de l'onde lumineuse incidente 12, l'échantillon 10 peut engendrer une onde diffractée 13, susceptible de produire, au niveau du plan de détection P, des interférences, en particulier avec une partie de l'onde lumineuse incidente 12' ayant traversé l'échantillon. Par ailleurs, l'échantillon peut absorber une partie de l'onde lumineuse incidente 12. Ainsi, de façon générale, et quelque soit le mode de réalisation, l'onde lumineuse 14, transmise par l'échantillon, et à laquelle est exposé le capteur d'image 16, peut comprendre :

- une composante de diffraction 13 résultant de la diffraction de l'onde lumineuse incidente 12 par l'échantillon ;
- une composante 12' résultant de l'absorption de l'onde lumineuse incidente 12 par l'échantillon.

Sur la figure 2, on a représenté une onde diffractée 13 par chaque particule 10b composant l'échantillon, ainsi que l'onde lumineuse 12' résultant de l'absorption par l'échantillon de l'onde lumineuse incidente 12.

Un processeur 20, par exemple un microprocesseur, est apte à traiter chaque image acquise par le capteur d'image 16. En particulier, le processeur est un microprocesseur relié à une mémoire programmable 22 dans laquelle est stockée une séquence d'instructions pour effectuer ses opérations de traitement d'images. Le processeur peut être couplé à un écran 24 permettant l'affichage d'images acquises par le capteur d'image 16 ou calculées par le processeur 20.

Dans certains cas, l'image acquise sur le capteur d'image 16, également appelée hologramme, ne permet pas d'obtenir une représentation suffisamment précise de l'échantillon observé. On peut appliquer, à chaque image acquise par le capteur d'image, un opérateur de propagation h, de façon à calculer une grandeur représentative de l'onde lumineuse 14 transmise par l'échantillon 10, et à laquelle est exposé le capteur d'image 16. Un tel procédé, désigné par le terme reconstruction holographique, permet notamment de calculer une expression complexe A de l'onde lumineuse 14. On peut ainsi reconstruire une image du module ou de la phase de cette onde lumineuse 14 dans un plan de reconstruction situé à une distance non nulle du plan de détection, et étant de préférence parallèle au plan de détection P, et notamment dans un plan selon lequel s'étend l'échantillon. De tels algorithmes sont connus de l'homme du métier. On en trouvera un exemple dans US2012/0218379, ou encore dans la demande de brevet FR1554811 déposée le 28 mai 2015.

Un procédé de reconstruction holographique comporte notamment l'application d'un produit de convolution à une image I acquise par le capteur d'image 16 par un opérateur de propagation h. Il est alors possible de reconstruire une expression complexe A de l'onde lumineuse 14 en tout point de coordonnées (x, y, z) de l'espace, et en particulier dans un plan de reconstruction $P_z$ situé à une distance |z| non nulle du capteur d'image 16, ce plan de reconstruction pouvant être un plan selon lequel s'étend l'échantillon. L'expression complexe A est une grandeur complexe dont l'argument et le module sont respectivement représentatifs de la phase et de l'intensité de l'onde lumineuse 14 à laquelle est exposé le capteur d'image 16. Le produit de convolution de l'image I par l'opérateur de propagation h permet d'obtenir une image complexe $A_z$ représentant une distribution spatiale de l'expression complexe A dans le plan de reconstruction $P_z$, s'étendant à une coordonnée z du plan de détection P. Cette image complexe correspond à une image complexe de l'échantillon 10 dans le plan de reconstruction $P_z$. L'opérateur de propagation h a pour fonction de décrire la propagation de la lumière entre le capteur d'image 16 et un point de coordonnées (x, y, z), situé à une distance |z| du capteur d'image. Il est alors possible de déterminer le module $M(x, y, z)$ et/ou la phase φ (x,y,z) l'onde lumineuse 14, à ladite distance |z|, dite distance de reconstruction, avec :

-

$$M(x, y, z) = abs\,[A(x, y, z)] \quad (1)$$

-

$$\varphi(x, y, z) = arg\,[A(x, y, z)] \quad (2)$$

Les opérateurs abs et arg désignent respectivement le module et l'argument.

Autrement dit, l'amplitude complexe A de l'onde lumineuse 14 en tout point de coordonnées (x, y, z) de l'espace est telle que : $A(x, y, z) = M(x, y, z)e^{j\varphi(x,y,z)}$ avec A = I * h où * désigne l'opérateur produit de convolution.

Les inventeurs ont montré qu'avec une diode électroluminescente micrométrique, telle que précédemment définie, l'onde lumineuse incidente 12 se propageant jusqu'à l'échantillon est suffisamment intense et suffisamment cohérente pour former une image exploitable de l'échantillon. L'image acquise par le capteur d'image est exploitable en tant que telle, ou fait l'objet d'un algorithme de reconstruction holographique tel que précédemment décrit. L'intensité de cette onde, dans un plan perpendiculaire à son axe de propagation, est plus uniforme que selon l'art antérieur, du fait de l'absence de filtre spatial définissant une ouverture étroite entre la source de lumière 11 et l'échantillon 10. Par ouverture étroite, on entend une ouverture dont la diagonale ou le diamètre est inférieur à 5mm ou 1 mm.

L'absence d'un tel filtre permet d'augmenter également l'éclairement de l'échantillon. De telles diodes électroluminescentes sont disponibles commercialement à des coûts compétitifs. L'utilisation de telles diodes électroluminescentes permet de réduire la distance entre la source de lumière 11 et l'échantillon 10, cette dernière pouvant être abaissée à 5 cm, voire moins que 5 cm. Cela permet d'obtenir des dispositifs particulièrement compacts.

Par ailleurs, l'absence d'un filtre spatial permet de s'affranchir des contraintes de centrage de la source de lumière vis-à-vis d'une ouverture étroite formée dans le filtre

La figure 3 schématise une source de lumière 11 comportant trois diodes micrométriques élémentaires 11i, la surface d'émission de chacune s'étendant selon un carré de 150$\mu$m de côté. Le terme surface d'émission désigne la surface de la diode de laquelle la lumière est émise. Cette source de lumière est commercialisée par Osram sous la référence SFH 7050. Chaque diode élémentaire émet selon une bande spectrale $\Delta\lambda$ différente l'une de l'autre, en l'occurrence 950 nm $\pm$ 60 nm, 660 nm $\pm$ 17 nm, 525 nm $\pm$ 34 nm, la puissance optique d'émission étant comprise entre 2.9mW et 6.5 mW. Ces diodes micrométriques élémentaires peuvent être activées successivement, ce qui permet d'acquérir successivement des images de l'échantillon dans différentes bandes spectrales $\Delta\lambda$. Une telle acquisition, dite multispectrale, permet d'appliquer un algorithme de reconstruction à chaque image acquise tel que décrit dans la publication. S. N. A. Morel, A. Delon, P. Blandin, T. Bordy, O. Cioni, L. Hervé, C. Fromentin, J. Dinten, and C. Allier, "Wide-Field Lensfree Imaging of Tissue Slides," in Advanced Microscopy Techniques IV; and Neurophotonics II, E. Beaurepaire, P. So, F. Pavone, and E. Hillman, eds., Vol. 9536 of SPIE Proceedings (Optical Society of America, 2015), désignée par la suite par "Morel 2015".

Dans cet exemple, la source de lumière 11 comporte également une photodiode 11$_K$, apte à détecter une intensité lumineuse ambiante ou réfléchie par l'échantillon lorsque ce dernier est plongé dans l'obscurité. Cela permet un ajustement d'une puissance d'émission d'une ou plusieurs diodes électroluminescentes élémentaires 11$_i$.

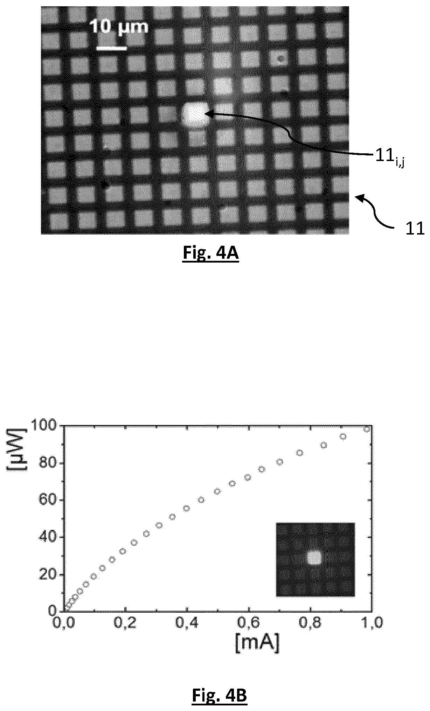

Selon un autre exemple, représenté sur la figure 4A, la source de lumière 11 comporte des diodes électroluminescentes micrométriques élémentaires 11$_{ij}$ agencées selon une matrice, par exemple une matrice bidimensionnelle régulière. Une telle matrice, conçue pour réaliser des écrans d'affichage miniatures, est décrite dans la demande de brevet FR3016463 ou dans la publication Monolithic LED arrays, next generation smart lighting sources ", Proc. SPIE 9768, Light-Emitting Diodes: Materials, Devices, and Applications for Solid State Lighting XX, 97680X (March 8, 2016).

Chaque diode élémentaire s'étend selon une surface d'émission décrivant un carré de 6,5 $\mu$m de côté. La distance centre à centre de chaque diode élémentaire est de 10 $\mu$m. Une telle matrice peut comporter plusieurs dizaines à plusieurs centaines de diodes élémentaires 11$_{ij}$, par exemple 320 x 252 diodes élémentaires. La figure 4B représente la puissance optique d'émission en fonction d'une intensité du courant d'alimentation d'une diode élémentaire, dans une bande spectrale centrée sur 440 nm. La puissance optique peut dépasser 50 $\mu$W, ce qui permet de former des images exploitables lorsque la source de lumière est distante de quelques centimètres de l'échantillon. Un tel niveau de puissance permet d'interposer un filtre passe-bande entre la source de lumière et l'échantillon, de façon à réduire la bande spectrale $\Delta\lambda$ de l'onde incidente 12, ce qui permet d'optimiser sa cohérence temporelle.

La bande spectrale d'émission de chaque diode électroluminescente élémentaire 11$_{ij}$ peut être ajustée, de telle sorte que différentes diodes élémentaires émettent respectivement dans différentes bandes spectrales. Cela permet l'application d'un algorithme de reconstruction basé sur l'acquisition successive d'images de l'échantillon acquises dans différentes bandes spectrales, comme décrit par exemple dans « Morel 2015 ».

Les inventeurs ont appliqué un tel algorithme, décrit en particulier dans le paragraphe 2.3 de cette publication, à l'observation d'une mire. Pour cela, on a acquis des premières images et des deuxièmes images respectivement en utilisant un dispositif tel que représenté sur la figure 1C, représentatif de l'art antérieur, ainsi qu'un dispositif tel que représenté sur la figure 2, en utilisant la source de lumière décrite en lien avec la figure 3. Dans chaque dispositif, on a utilisé un capteur CMOS monochrome. La mire est une mire d'absorption connue sous la référence MIRE USAF, comportant des bandes opaques, et disposée à une distance de 1 mm du capteur d'image 16.

Dans un premier essai, représentant l'art antérieur, on a mis en œuvre un dispositif tel que représenté sur la figure 1C, la source de lumière étant une diode électroluminescente fournie par CREE sous la référence XLamp MCE. Les trois diodes électroluminescentes élémentaires 9$_1$, 9$_2$ et 9$_3$ de cette source de lumière ont été activées successivement, de façon à acquérir trois images $I_\lambda$ respectivement représentative de chaque bande spectrale $\Delta\lambda$. Dans un deuxième essai, on a mis en œuvre un dispositif tel que représenté sur la figure 2, la source de lumière utilisée étant la source de lumière Osram décrite en relation avec la figure 3. Les trois microdiodes 11$_1$, 11$_2$ et 11$_3$ la composant ont été activées successivement de façon à acquérir trois images $I_\lambda$ respectivement représentative de chaque bande spectrale $\Delta\lambda$. Dans chaque essai, la distance entre la source de lumière et l'échantillon était d'environ 5 cm, le protocole suivi étant :

- acquisition de trois images $I_\lambda$, l'échantillon étant successivement illuminé dans les trois bandes spectrales d'illumination précédemment décrites ;
- application d'un algorithme de rétropropagation - propagation itératif tel que décrit dans la publication "Morel 2015" à chaque image $I_\lambda$, cet algorithme étant également décrit dans la demande de brevet FR1554811 déposée le 28 mai 2015, et plus précisément dans les étapes 100 à 500 décrites dans cette demande, de façon à obtenir, dans chaque bande spectrale, une amplitude complexe $A_\lambda(x, y, z)$ de l'onde lumineuse 14 à laquelle est exposé le capteur d'image, dans un plan de reconstruction correspondant au plan dans lequel est disposée la mire, soit à une distance de 1 mm du capteur d'image;
- calcul du module $M_\lambda(x, y, z)$ de l'amplitude complexe $A_\lambda(x, y, z)$ résultant de l'algorithme dans le plan de reconstruction, et cela dans chaque bande spectrale ;
- détermination de la valeur moyenne des modules $M_\lambda(x, y, z)$ ainsi calculés dans chaque bande spectrale, de façon à obtenir une image représentant la valeur moyenne de ces modules, dite image du module.

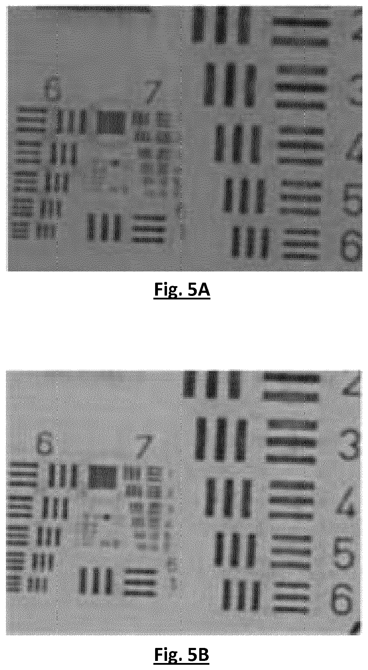

La figure 5A représente une image du module obtenue lors du premier essai, représentant l'art antérieur. La figure 5B représente une image du module obtenue lors du deuxième essai, représentant l'invention. La résolution obtenue en mettant en œuvre l'invention est meilleure que la résolution obtenue selon l'art antérieur (1.9 $\mu$m contre 2.2 $\mu$m).

Ainsi, l'invention permet d'obtenir une représentation d'un échantillon, qu'il s'agisse d'une image acquise ou d'une image obtenue par application d'un opérateur de reconstruction holographique à l'image acquise, en utilisant une source de lumière simple, peu onéreuse et ne nécessitant pas l'interposition d'un filtre spatial entre l'échantillon et la source de lumière.

L'invention pourra être utilisée pour l'observation d'échantillons de type tissus biologiques, de particules biologiques, ou autres particules, de manière à caractériser des échantillons dans les domaines de la santé ou d'autres applications industrielles, par exemple l'environnement ou l'agroalimentaire.

**Revendications**

1. Dispositif d'observation d'un échantillon comportant :

   ▪ un support (10s), apte à recevoir l'échantillon (10)
   ▪ une source de lumière (11), apte à émettre une onde lumineuse incidente (12) se propageant vers le support (10s),;

   ▪ un capteur d'image (16), apte à détecter une onde lumineuse transmise par l'échantillon lorsque l'échantillon est disposé sur le support, entre la source de lumière et le capteur d'image, la distance entre la source de lumière et l'échantillon étant alors supérieure à 1 cm ;
   **caractérisé en ce que** la source de lumière (11) comporte une diode électroluminescente ($11_i$, $11_{ij}$) dite micrométrique, dont une surface d'émission de la lumière présente un diamètre ou une plus grande diagonale inférieure à 500 $\mu$m, la diode électroluminescente micrométrique présentant une puissance optique d'émission supérieure à 50 $\mu$W ;
   et **en ce qu'**aucune optique de grossissement n'est disposée entre l'échantillon (10), lorsqu'il est disposé sur le support (10s), et le capteur d'image (16).

2. Dispositif d'observation d'un échantillon selon la revendication 1, dans lequel la surface d'émission de la diode électroluminescente micrométrique ($11_i$, $11_{ij}$) présente un diamètre ou une plus grande diagonale inférieure à 150 $\mu$m ou à 100 $\mu$m ou 50 $\mu$m ou à 10 $\mu$m.

3. Dispositif selon l'une quelconque des revendications précédentes, dans lequel la source de lumière (11) comporte une pluralité de diodes électroluminescentes micrométriques ($11_i$, $11_{ij}$).

4. Dispositif selon la revendication 3, dans laquelle les diodes électroluminescentes micrométriques ($11_i$, $11_{ij}$) sont agencées selon une matrice, en étant espacées les unes des autres d'une distance inférieure à 50 $\mu$m.

5. Dispositif selon l'une quelconque des revendications 3 ou 4 dans lequel les diodes électroluminescentes micrométriques ($11_i$, $11_{ij}$) ont des bandes spectrales d'émission différentes l'une de l'autre et sont aptes à être activées successivement ou simultanément.

6. Dispositif selon l'une quelconque des revendications 3 à 5, dans lequel les diodes électroluminescentes micrométriques ($11_i$, $11_{ij}$) sont aptes à être activées indépendamment les unes des autres.

7. Procédé d'observation d'un échantillon comportant les étapes suivantes :

   a) disposition d'un échantillon (10) entre une source de lumière (11) et un capteur d'image (16) de telle sorte que le capteur d'image est apte à acquérir une image de l'échantillon lorsque l'échantillon est illuminé par la source de lumière (11), la source de lumière étant disposée à une distance de l'échantillon supérieure à 1 cm ;

b) illumination de l'échantillon par la source de lumière et acquisition d'une image de l'échantillon par le capteur d'image (16) ;

le procédé étant **caractérisé en ce qu'**il est mis en œuvre en utilisant une source de lumière (11) comportant au moins une diode électroluminescente micrométrique ($11_i$, $11_{ij}$) dont la surface d'émission présente un plus grand diamètre ou une plus grande diagonale inférieure à 500 $\mu$m, la puissance d'émission de la source de lumière est supérieure à 50 $\mu$W, et **en ce qu'**aucune optique de grossissement n'est disposée entre l'échantillon (10) et le capteur d'image (16).

8. Procédé d'observation d'un échantillon selon la revendication 7, dans lequel le plus grand diamètre ou la plus grande diagonale de la surface d'émission de la diode électroluminescente micrométrique ($11_i$, $11_{ij}$) est inférieure à 150 $\mu$m ou à 100 $\mu$m ou à 50 $\mu$m ou à 10 $\mu$m.

9. Procédé selon l'une quelconque des revendications 7 ou 8, dans lequel la source de lumière comporte une pluralité de diodes électroluminescentes micrométriques ($11_i$, $11_{ij}$).

10. Procédé selon la revendication 9, dans lequel les diodes électroluminescentes micrométriques ($11_i$, $11_{ij}$) sont activées successivement, le capteur d'image acquérant une image lors de chaque activation successive.

11. Procédé selon l'une quelconque des revendications 9 ou 10, dans lequel les diodes électroluminescentes micrométriques ont des bandes spectrales d'émission ($\Delta\lambda$) différentes les unes des autres.

12. Procédé selon l'une quelconque des revendications 7 à 11, dans lequel le capteur d'image (16) s'étendant dans un plan de détection ($P$), le procédé comporte une application d'un opérateur de propagation ($h$) à chaque image acquise, de façon à obtenir une expression complexe ($A$) d'une onde lumineuse (14) à laquelle est exposé le capteur d'image, dans un plan de reconstruction ($P_z$) situé à une distance non nulle du plan de détection.

13. Procédé selon la revendication 12, dans lequel le plan de reconstruction est un plan selon lequel s'étend l'échantillon.

**Patentansprüche**

1. Vorrichtung zur Beobachtung einer Probe, umfassend:

• einen Träger (10s), der geeignet ist, die Probe (10) aufzunehmen
• eine Lichtquelle (11), die geeignet ist, eine einfallende Lichtwelle (12) zu emittieren, die sich zu dem Träger (10s) hin ausbreitet ;
• einen Bildsensor (16), der geeignet ist, eine Lichtwelle, die von der Probe durchgelassen wird, wenn die Probe auf dem Träger angeordnet ist, zwischen der Lichtquelle und dem Bildsensor zu detektieren, wobei der Abstand zwischen der Lichtquelle und der Probe dabei größer als 1 cm ist;

**dadurch gekennzeichnet, dass** die Lichtquelle (11) eine sogenannte mikrometrische Leuchtdiode ($11_i$, $11_{ij}$) umfasst, bei der eine Lichtemissionsfläche einen Durchmesser oder eine größte Diagonale von weniger als 500 $\mu$m aufweist, wobei die mikrometrische Leuchtdiode eine optische Emissionsleistung von mehr als 50 $\mu$W aufweist;

und dadurch, dass keine Vergrößerungsoptik zwischen der Probe (10), wenn sie auf dem Träger (10s) angeordnet ist, und dem Bildsensor (16) angeordnet ist.

2. Vorrichtung zur Beobachtung einer Probe nach Anspruch 1, wobei die Emissionsfläche der mikrometrischen Leuchtdiode ($11_i$, $11_{ij}$) einen Durchmesser oder eine größte Diagonale von weniger als 150 $\mu$m oder als 100 $\mu$m oder 50 $\mu$m oder als 10 $\mu$m aufweist.

3. Vorrichtung nach einem der vorhergehenden Ansprüche, wobei die Lichtquelle (11) eine Mehrzahl von mikrometrischen Leuchtdioden ($11_i$, $11_{ij}$) umfasst.

4. Vorrichtung nach Anspruch 3, wobei die mikrometrischen Leuchtdioden ($11_i$, $11_{ij}$) gemäß einer Matrix angeordnet sind, wobei sie voneinander um einen Abstand von weniger als 50 $\mu$m beabstandet sind.

5. Vorrichtung nach einem der Ansprüche 3 oder 4, wobei die mikrometrischen Leuchtdioden ($11_i$, $11_{ij}$) voneinander verschiedene Emissionsspektralbänder haben und geeignet sind, sukzessive oder gleichzeitig aktiviert zu werden.

6. Vorrichtung nach einem der Ansprüche 3 bis 5, wobei die mikrometrischen Leuchtdioden ($11_i$, $11_{ij}$) geeignet sind, unabhängig voneinander aktiviert zu werden.

7. Verfahren zur Beobachtung einer Probe, umfassend die folgenden Schritte:

a) Anordnen einer Probe (10) zwischen einer Lichtquelle (11) und einem Bildsensor (16) derart, dass der Bildsensor geeignet ist, ein Bild der Probe zu erfassen, wenn die Probe durch die Lichtquelle (11) beleuchtet wird, wobei die Lichtquelle in einem Abstand von der Probe von mehr als 1 cm angeordnet ist;
b) Beleuchten der Probe durch die Lichtquelle und Erfassen eines Bildes der Probe durch den Bildsensor (16);

wobei das Verfahren **dadurch gekennzeichnet ist, dass** es unter Verwendung einer Lichtquelle (11) durchgeführt wird, die mindestens eine mikrometrische Leuchtdiode ($11_i$, $11_{ij}$) umfasst, deren Emissionsfläche einen größten Durchmesser oder eine größte Diagonale von weniger als 500 $\mu$m aufweist, die Emissionsleistung der Lichtquelle mehr als 50 $\mu$W beträgt, und dadurch, dass keine Vergrößerungsoptik zwischen der Probe (10) und dem Bildsensor (16) angeordnet ist.

8. Verfahren zur Beobachtung einer Probe nach Anspruch 7, wobei der größte Durchmesser oder die größte Diagonale der Emissionsfläche der mikrometrischen Leuchtdiode ($11_i$, $11_{ij}$) weniger als 150 $\mu$m oder als 100 $\mu$m oder als 50 $\mu$m oder als 10 $\mu$m aufweist.

9. Verfahren nach einem der Ansprüche 7 oder 8, wobei die Lichtquelle eine Mehrzahl von mikrometrischen Leuchtdioden ($11_i$, $11_{ij}$) umfasst.

10. Verfahren nach Anspruch 9, wobei die mikrometrischen Leuchtdioden ($11_i$, $11_{ij}$) sukzessive aktiviert werden, wobei der Bildsensor bei jeder sukzessiven Aktivierung ein Bild erfasst.

11. Verfahren nach einem der Ansprüche 9 oder 10, wobei die mikrometrischen Leuchtdioden voneinander verschiedene Emissionsspektralbänder ($\Delta\lambda$) haben.

12. Verfahren nach einem der Ansprüche 7 bis 11, wobei, wenn der Bildsensor (16) sich in einer Detektionsebene ($P$) erstreckt, das Verfahren ein Anwenden eines Ausbreitungsoperators ($h$) auf jedes erfasste Bild umfasst, so dass ein komplexer Ausdruck ($A$) einer Lichtwelle (14), mit welcher der Bildsensor belichtet wird, in einer Rekonstruktionsebene ($P_z$) erhalten wird, die in einem Abstand ungleich null von der Detektionsebene gelegen ist.

13. Verfahren nach Anspruch 12, wobei die Rekonstruktionsebene eine Ebene ist, entlang der sich die Probe erstreckt.

**Claims**

1. A Device for observing a sample, including:

   - a holder (10s), able to hold the sample (10);
   - a light source (11) able to emit an incident light wave (12) that propagates towards the holder (10s);
   - an image sensor (16) configured to detect a light wave transmitted by the sample when the sample is placed on the holder, between the light source and the image sensor, the distance between the light source and the sample being larger than 1 cm;
   
   the device being **characterized in that** the light source (11) includes a micron-sized light-emitting diode ($11_i$, $11_{ij}$), a light-emission surface of which has a diameter or a largest diagonal smaller than 500 $\mu$m, the micron-sized light emitting diode having an optical emission power higher than 50 $\mu$W.
   and **in that** no magnifying optics are placed between the sample (10), when placed on the holder (10s), and the image sensor (16).

2. The Device according to Claim 1, wherein the emission surface of the micron-sized light-emitting diode ($11_i$, $11_{ij}$) has a diameter or a largest diagonal smaller than 150 $\mu$m or 100 $\mu$m or 50 $\mu$m or 10 $\mu$m.

3. The Device according to claim 1, wherein the light source (11) includes a plurality of micron-sized light-emitting diodes($11_i$, $11_{ij}$).

4. The Device according to claim 3, wherein the micron-sized light-emitting diodes ($11_i$, $11_{ij}$) are arranged in a matrix array, the diodes being spaced apart from one another by a distance smaller than 50 $\mu$m.

5. The Device according to any one of claims 3 or 4, wherein the micron-sized light-emitting diodes have emission spectral bands that are different from one another and are able to be activated successively or simultaneously.

6. The Device according to any one of claims 3 to 5, wherein the micron-sized light-emitting diodes ($11_i$, $11_{ij}$) are configured to be activated independently of one another.

7. A Method for observing a sample, including the following steps:

   - placing a sample (10) between a light source (11) and an image sensor (16) so that the image sensor is configured to acquire an image of the sample when the sample is illuminated by the light source; (11), the distance between the light source and the sample being larger than 1 cm ;
- illuminating the sample with the light source and acquiring an image of the sample with the image sensor (16);

the method being **characterized in that** it is operated with a light source (11) which includes at least one micron-sized light-emitting diode ($11_i$, $11_{ii}$) defining an emission surface, a largest diameter or a largest diagonal of which is smaller than 500 $\mu$m, the emission power of the light source being higher than 50 $\mu$W ;

and **in that** no magnifying optics are placed between the sample (10), and the image sensor (16).

8. The Method according to claim 7, wherein the largest diameter or largest diagonal of the emission surface of the micron-sized light-emitting diode($11_i$, $11_{ii}$) is smaller than 150 $\mu$m or 100 $\mu$m or 50 $\mu$m or 10 $\mu$m.

9. The Method according to any one of claim 7 or 8, wherein the light source includes a plurality of micron-sized light-emitting diodes ($11_i$, $11_{ii}$).

10. The Method according to Claim 9, wherein the micron-sized light-emitting diodes ($11_i$, $11_{ii}$) are activated successively, the image sensor acquiring one image during each successive activation.

11. The Method according to any one of claims 9 or 10, wherein the micron-sized light-emitting diodes ($11_i$, $11_{ii}$) have spectral emission bands ($\Delta\lambda$) that are different from one another.

12. The Method according to any one of claim 7 to 11, wherein, the image sensor (16) lies in a detection plane (P) and wherein the method includes applying a propagation operator (h)to each acquired image, so as to obtain a complex expression (A) of a light wave (14) to which the image sensor is exposed, in a reconstruction plane ($P_z$), the reconstruction plane being located at a nonzero distance from the detection plane.

13. The Method according to Claim 12, wherein the reconstruction plane is a plane in which the sample lies.

**Fig. 1A**

**Fig. 1B**

**Fig. 1C**

**Fig. 2**

**Fig. 3**

**Fig. 4A**

**Fig. 4B**

**Fig. 5A**

**Fig. 5B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- US 20120218379 A
- EP 2772748 A
- FR 1554811
- FR 3016463

**Littérature non-brevet citée dans la description**

- **GARCIA-SUCERQUIA J.** Digital in-line holographic microscopy. *Applied Optics*, 10 February 2006, vol. 45 (5)
- Wide-Field Lensfree Imaging of Tissue Slides. **S. N. A. MOREL** ; **A. DELON** ; **P. BLANDIN** ; **T. BORDY** ; **O. CIONI** ; **L. HERVÉ** ; **C. FROMENTIN** ; **J. DINTEN** ; **C. ALLIER**. Advanced Microscopy Techniques IV; and Neurophotonics II. Optical Society of America, 2015, vol. 9536